# EUROPEAN PATENT APPLICATION

(11) **EP 4 746 509 A1**
(43) Date of publication of application: **20.05.2026**
(21) Application number: 24838478.6
(22) Date of filing: 30.05.2024
(51) Int. Cl.: H04W 28/06, H04L 69/14, H04L 45/24, H04W 28/02, H04W 28/18

(54) **DATA TRANSMISSION METHOD AND APPARATUS**

(30) Priority: 12.07.2023 CN 202310851444
(71) Applicant: Datang Mobile Communications Equipment Co., Ltd., Beijing 100085 (CN)
(72) Inventor: LU, Jie, Beijing 100085 (CN); XIONG, Chunshan, Beijing 100085 (CN)
(74) Representative: Maiwald GmbH
(86) International application number: PCT/CN2024/096252
(87) International publication number: WO 2025/011220

(57) **Abstract**

The present disclosure provides a data transmission method and device, and relates to the field of communication technology. The method includes: a terminal sending a first message, where the first message includes first capability information, the first capability information is configured to indicate a multipath transmission capability of the terminal at a PDU Set granularity; obtaining a second message, where the second message is sent by an SMF according to the first message, the second message includes ATSSS rule information, the ATSSS rule information includes PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity; performing the data multipath transmission at the PDU Set granularity according to the first transmission parameter when the PDU Set indication information indicates that the data multipath transmission is performed at the PDU Set granularity.

## Description

### CROSS-REFERENCE TO RELATED APPLICATION

This disclosure claims priority to Chinese Patent Application No. 202310851444.5, filed on July 12, 2023, entitled "DATA TRANSMISSION METHOD AND DEVICE", the entire contents of which are incorporated herein by reference.

### TECHNICAL FIELD

This disclosure relates to the field of communication technology, and particularly, to a data transmission method and device.

### BACKGROUND

It is an industry consensus that Extended Reality (XR) services will become an important application scenario for future 6G. To optimize the transmission efficiency of XR media services, a Protocol Data Unit (PDU) set can be introduced, considering the service characteristics of XR media.

Multipath transmission technology is an effective method to improve data transmission speed and network throughput under multiple access conditions by utilizing multiple transmission paths. However, existing PDU-granularity Access Traffic Steering, Switching, Splitting (ATSSS) multipath transmission technologies may distribute PDUs in the same PDU set to different transmission paths in XR service scenarios, which may lead to out-of-order transmission of multiple PDUs in the PDU set.

### SUMMARY

The purpose of this disclosure is to provide a data transmission method and device to solve the problem of out-of-order transmission of multiple PDUs in a PDU Set caused by PDU granularity multipath transmission technology.

To achieve the above purpose, the present disclosure provides a data transmission method, comprising:
a terminal sending a first message, wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a Protocol Data Unit Set (PDU Set) granularity;
the terminal obtaining a second message, wherein the second message is sent by a Session Management Function (SMF) according to the first message, the second message comprises Access Traffic Steering, Switching, Splitting (ATSSS) rule information, the ATSSS rule information comprises PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity;
the terminal performing the data multipath transmission at the PDU Set granularity according to the first transmission parameter when the PDU Set indication information indicates that the data multipath transmission is performed at the PDU Set granularity.

In some embodiments, the terminal sending the first message comprises:
obtaining connection capability information sent by a Policy Control Function (PCF), wherein the connection capability information comprises an Extended Reality (XR) type;
sending the first message according to the connection capability information.

In some embodiments, the obtaining connection capability information sent by a Policy Control Function (PCF) comprises:
obtaining UE Route Selection Policy (URSP) information sent by the PCF, wherein the URSP information comprises a service descriptor, the service descriptor comprises the connection capability information.

In some embodiments, the first message comprises Session Management (SM) capability information, the SM capability information comprises an ATSSS parameter, the ATSSS parameter comprises the first capability information.

In some embodiments, the terminal performing the data multipath transmission at the PDU Set granularity according to the first transmission parameter comprises:
the terminal transmitting multiple PDUs of a same PDU Set on a same transmission path according to the first transmission parameter, wherein the PDU Set is a PDU Set corresponding to an Extended Reality (XR) service.

An embodiment of the present disclosure further provides a data transmission method, comprising:
a Session Management Function (SMF) sending a second message to a terminal according to a first message, and sending a third message to a target User Plane Function (UPF);
wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a PDU Set granularity;
the second message comprises ATSSS rule information, the ATSSS rule information comprises PDU Set indication information and a first transmission parameter, the PDU Set indication information is configured to indicate whether data multipath transmission is performed at the PDU Set granularity, and the first transmission parameter is configured to indicate a transmission parameter corresponding to the data multipath transmission at the PDU Set granularity;
the third message comprises N4 rule information, the N4 rule information comprises multipath PDU Set control information and a second transmission parameter, the multipath PDU Set control information is configured to indicate activation of transmission switching of multipath transmission traffic based on the PDU Set granularity, the second transmission parameter is configured to indicate a transmission parameter corresponding to the data multipath transmission at the PDU Set granularity.

In some embodiments, before sending the second message to the terminal and sending the third message to the UPF, the method further comprises:
obtaining Policy Control and Charging (PCC) rule information sent by a PCF, wherein the PCC rule information comprises MA PDU session control information, the MA PDU session control information comprises the PDU Set indication information and a third transmission parameter, the third transmission parameter is configured to indicate a transmission parameter corresponding to the data multipath transmission at the PDU Set granularity;
creating the ATSSS rule information and the N4 rule information according to the PCC rule information.

In some embodiments, before sending the third message to the target UPF, the method further comprises:
selecting a UPF that supports the multipath transmission capability at the PDU Set granularity as the target UPF according to the first message.

An embodiment of the present disclosure further provides a data transmission method, comprising:
a target User Plane Function (UPF) obtaining N4 rule information sent by a Session Management Function (SMF), wherein the N4 rule information comprises multipath PDU Set control information and a second transmission parameter, the multipath PDU Set control information is configured to indicate activation of transmission switching of multipath transmission traffic based on a PDU Set granularity, the second transmission parameter is configured to indicate a transmission parameter corresponding to data multipath transmission at the PDU Set granularity;
the target UPF performing the data multipath transmission at the PDU Set granularity according to the N4 rule information.

In some embodiments, the target UPF performing the data multipath transmission at the PDU Set granularity according to the N4 rule information comprises:
transmitting multiple PDUs of a same PDU Set on a same transmission path according to the N4 rule information, wherein the PDU Set is a PDU Set corresponding to an Extended Reality (XR) service.

In some embodiments, the method further comprises:
sending a registration request message to a Network Repository Function (NRF), wherein the registration request message comprises second capability information, the second capability information is configured to indicate that the target UPF supports a multipath transmission capability at the PDU Set granularity, the N4 rule information is sent by the SMF when the target UPF supports the multipath transmission capability at the PDU Set granularity.

An embodiment of the present disclosure further provides a data transmission device, comprising a memory, a transceiver, and a processor;
wherein the memory is configured to store a computer program; the transceiver is configured to send and receive data under control of the processor; and the processor is configured to read the computer program in the memory and perform following operations:
sending a first message, wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a Protocol Data Unit Set (PDU Set) granularity;
obtaining a second message, wherein the second message is sent by a Session Management Function (SMF) according to the first message, the second message comprises Access Traffic Steering, Switching, Splitting (ATSSS) rule information, the ATSSS rule information comprises PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity;
performing the data multipath transmission at the PDU Set granularity according to the first transmission parameter when the PDU Set indication information indicates that the data multipath transmission is performed at the PDU Set granularity.

In some embodiments, the processor further performs following steps:
obtaining connection capability information sent by a Policy Control Function (PCF), wherein the connection capability information comprises an Extended Reality (XR) type;
sending the first message according to the connection capability information.

In some embodiments, the processor further performs following steps:
obtaining UE Route Selection Policy (URSP) information sent by the PCF, wherein the URSP information comprises a service descriptor, the service descriptor comprises the connection capability information.

In some embodiments, the first message comprises Session Management (SM) capability information, the SM capability information comprises an ATSSS parameter, the ATSSS parameter comprises the first capability information.

In some embodiments, the processor further performs following steps:
transmitting multiple PDUs of a same PDU Set on a same transmission path according to the first transmission parameter, wherein the PDU Set is a PDU Set corresponding to an Extended Reality (XR) service.

An embodiment of the present disclosure further provides a data transmission device, comprising a memory, a transceiver, and a processor;
wherein the memory is configured to store a computer program; the transceiver is configured to send and receive data under control of the processor; and the processor is configured to read the computer program in the memory and perform following operations:
sending a second message to a terminal according to a first message, and sending a third message to a target User Plane Function (UPF);
wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a PDU Set granularity;
the second message comprises ATSSS rule information, the ATSSS rule information comprises PDU Set indication information and a first transmission parameter, the PDU Set indication information is configured to indicate whether data multipath transmission is performed at the PDU Set granularity, and the first transmission parameter is configured to indicate a transmission parameter corresponding to the data multipath transmission at the PDU Set granularity;
the third message comprises N4 rule information, the N4 rule information comprises multipath PDU Set control information and a second transmission parameter, the multipath PDU Set control information is configured to indicate activation of transmission switching of multipath transmission traffic based on the PDU Set granularity, the second transmission parameter is configured to indicate a transmission parameter corresponding to the data multipath transmission at the PDU Set granularity.

In some embodiments, the processor further performs following steps:
obtaining Policy Control and Charging (PCC) rule information sent by a PCF, wherein the PCC rule information comprises MA PDU session control information, the MA PDU session control information comprises the PDU Set indication information and a third transmission parameter, the third transmission parameter is configured to indicate a transmission parameter corresponding to the data multipath transmission at the PDU Set granularity;
creating the ATSSS rule information and the N4 rule information according to the PCC rule information.

In some embodiments, the processor further performs following steps:
selecting a UPF that supports the multipath transmission capability at the PDU Set granularity as the target UPF according to the first message.

An embodiment of the present disclosure further provides a data transmission device, comprising a memory, a transceiver, and a processor;
wherein the memory is configured to store a computer program; the transceiver is configured to send and receive data under control of the processor; and the processor is configured to read the computer program in the memory and perform following operations:
obtaining N4 rule information sent by a Session Management Function (SMF), wherein the N4 rule information comprises multipath PDU Set control information and a second transmission parameter, the multipath PDU Set control information is configured to indicate activation of transmission switching of multipath transmission traffic based on a PDU Set granularity, the second transmission parameter is configured to indicate a transmission parameter corresponding to data multipath transmission at the PDU Set granularity;
performing the data multipath transmission at the PDU Set granularity according to the N4 rule information.

In some embodiments, the processor further performs following steps:
transmitting multiple PDUs of a same PDU Set on a same transmission path according to the N4 rule information, wherein the PDU Set is a PDU Set corresponding to an Extended Reality (XR) service.

In some embodiments, the processor further performs following steps:
sending a registration request message to a Network Repository Function (NRF), wherein the registration request message comprises second capability information, the second capability information is configured to indicate that the target UPF supports a multipath transmission capability at the PDU Set granularity, the N4 rule information is sent by the SMF when the target UPF supports the multipath transmission capability at the PDU Set granularity.

An embodiment of the present disclosure further provides a data transmission device, comprising:
a first sending unit, configured to send a first message, wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a Protocol Data Unit Set (PDU Set) granularity;
a first obtaining unit, configured to obtain a second message, wherein the second message is sent by a Session Management Function (SMF) according to the first message, the second message comprises Access Traffic Steering, Switching, Splitting (ATSSS) rule information, the ATSSS rule information comprises PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity;
a first transmitting unit, configured to perform the data multipath transmission at the PDU Set granularity according to the first transmission parameter when the PDU Set indication information indicates that the data multipath transmission is performed at the PDU Set granularity.

An embodiment of the present disclosure further provides a data transmission device, comprising:
a second sending unit, configured to send a second message to a terminal according to a first message, and send a third message to a target User Plane Function (UPF);
wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a PDU Set granularity;
the second message comprises ATSSS rule information, the ATSSS rule information comprises PDU Set indication information and a first transmission parameter, the PDU Set indication information is configured to indicate whether data multipath transmission is performed at the PDU Set granularity, and the first transmission parameter is configured to indicate a transmission parameter corresponding to the data multipath transmission at the PDU Set granularity;
the third message comprises N4 rule information, the N4 rule information comprises multipath PDU Set control information and a second transmission parameter, the multipath PDU Set control information is configured to indicate activation of transmission switching of multipath transmission traffic based on the PDU Set granularity, the second transmission parameter is configured to indicate a transmission parameter corresponding to the data multipath transmission at the PDU Set granularity.

An embodiment of the present disclosure further provides a data transmission device, comprising:
a second obtaining unit, configured to obtain N4 rule information sent by a Session Management Function (SMF), wherein the N4 rule information comprises multipath PDU Set control information and a second transmission parameter, the multipath PDU Set control information is configured to indicate activation of transmission switching of multipath transmission traffic based on a PDU Set granularity, the second transmission parameter is configured to indicate a transmission parameter corresponding to data multipath transmission at the PDU Set granularity;
a second transmitting unit, configured to perform the data multipath transmission at the PDU Set granularity according to the N4 rule information.

An embodiment of the present disclosure further provides a processor-readable storage medium, storing a computer program, the computer program is configured to cause a processor to perform steps of the data transmission method described above.

The above-disclosed technical solution has at least the following beneficial effects.

In embodiments of the present disclosure, the terminal sends a first message, where the first message is configured to request establishment or update of a PDU session of an MA PDU type, and the first message includes first capability information, the first capability information is configured to indicate that the terminal supports a multipath transmission capability at a PDU Set granularity; the terminal obtains a second message, where the second message is sent by a SMF according to the first message, the second message includes ATSSS rule information, the ATSSS rule information includes PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity; the terminal performs the data multipath transmission at the PDU Set granularity according to the first transmission parameter when the PDU Set indication information indicates that the data multipath transmission is performed at the PDU Set granularity. The above solution enables the terminal to perform the data multipath transmission at the PDU Set granularity according to the transmission parameter corresponding to the data multipath transmission at the PDU Set granularity, thus preventing PDUs in the same PDU Set from being distributed to different transmission paths, thereby effectively ensuring the transmission order of multiple PDUs in the PDU Set and improving transmission performance.

### BRIEF DESCRIPTION OF THE DRAWINGS

FIG. 1 shows a structural diagram of a network system to which embodiments of the present disclosure can be applied;
FIG. 2 shows a first schematic flowchart of a data transmission method according to an embodiment of the present disclosure;
FIG. 3 shows a schematic interaction diagram of a data transmission method according to an embodiment of the present disclosure;
FIG. 4 shows a second schematic flowchart of a data transmission method according to an embodiment of the present disclosure;
FIG. 5 shows a third schematic flowchart of a data transmission method according to an embodiment of the present disclosure;
FIG. 6 shows a first schematic diagram of multipath data transmission according to an embodiment of the present disclosure;
FIG. 7 shows a second schematic diagram of multipath data transmission according to an embodiment of the present disclosure;
FIG. 8 shows a first structural block diagram of a data transmission device according to an embodiment of the present disclosure;
FIG. 9 shows a second structural block diagram of a data transmission device according to an embodiment of the present disclosure;
FIG. 10 shows a first schematic block diagram of a data transmission device according to an embodiment of the present disclosure;
FIG. 11 shows a second schematic block diagram of a data transmission device according to an embodiment of the present disclosure;
FIG. 12 shows a third schematic block diagram of a data transmission device according to an embodiment of the present disclosure.

### DETAILED DESCRIPTION

The technical solutions of the present disclosure will be clearly and completely described below with reference to the accompanying drawings. Obviously, the described embodiments are some embodiments of the present disclosure, but not all embodiments. According to the embodiments in this disclosure, all other embodiments obtained by those skilled in the art without creative efforts are within the scope of protection of this disclosure.

The terms "first", "second", etc., used in the specification and claims of this disclosure are configured to distinguish similar objects and are not necessarily configured to describe a specific order or sequence. It should be understood that the terms used in this way may be interchanged where appropriate so that the embodiments of this disclosure described herein may be implemented, for example, in a sequence other than those illustrated or described herein. Furthermore, the terms "comprise" and "have", and any variations thereof, are intended to cover non-exclusive inclusion, such that a process, method, system, product, or device that includes a series of steps or units is not necessarily limited to those steps or units that are explicitly listed, but may include other steps or units that are not explicitly listed or that are inherent to such process, method, product, or device.

In embodiments of this disclosure, the term "and/or" describes the relationship between related objects, indicating that there may be three relationships. For example, A and/or B may represent three situations: A exists alone, A and B exist simultaneously, and B exists alone. The character "/" generally indicates that the objects before and after it are in an "or" relationship. In embodiments of this disclosure, the term "multiple (a plurality of)" refers to two or more, and other quantifiers are similar.

In embodiments of this disclosure, the words "exemplary" or "for example" are configured to indicate that something is an example, illustration, or description. Any embodiment or design described as "exemplary" or "for example" in this disclosure should not be construed as being more preferred or advantageous than other embodiments or designs. To be precise, the use of words such as "exemplary" or "for example" is intended to present relevant concepts in a specific way.

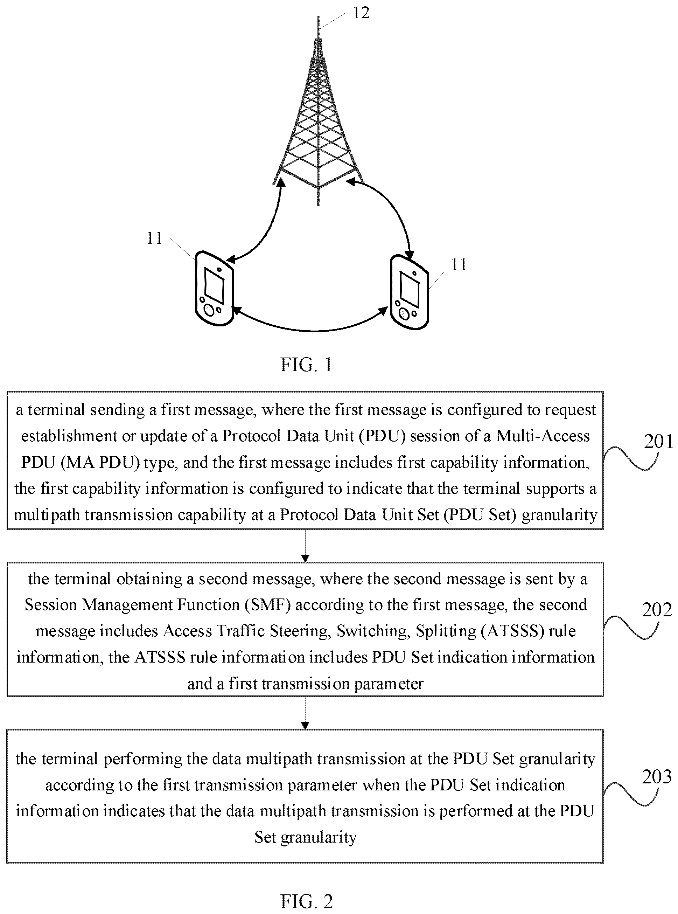

FIG. 1 shows a block diagram of a wireless communication system that may be applied to embodiments of the present disclosure. The wireless communication system includes a terminal device 11 and a network-side device (or a network device) 12. The terminal device 11 may also be called a terminal or user equipment (UE). It should be noted that the specific type of the terminal 11 is not limited in the embodiments disclosed herein. The network-side device 12 may be a base station or a core network. It should be noted that in embodiments of the present disclosure, only a base station in a New Radio (NR) system is used as an example, but the specific type of the base station is not limited.

To enable those skilled in the art to better understand the embodiments of this disclosure, the following description will be provided first.

Access Traffic Steering, Switching, Splitting (ATSSS) functionality enables multipath transmission of service data, dynamic splitting of user data streams, and adjustment of transmission paths for optimal performance by simultaneously using a 3rd Generation Partnership Project (3GPP) access network and a non-3GPP access network, as well as two independent N3/N9 tunnels between a PDU Session Anchor (PSA) and a Radio Access Network (RAN)/Access Network (AN).

An ATSSS connection service is achieved by establishing a Multi-Access PDU (MA PDU) session. When a UE registers via both 3GPP and non-3GPP access, or when a UE registers via only one access, the UE may request an MA PDU session. The ATSSS function may be supported on any type of access network, including untrusted and trusted non-3GPP access networks, as long as an MA PDU session may be established on such a type of access network.

The UE with the ATSSS capability may determine to request an MA PDU session according to the UE Route Selection Policy (URSP) rule provided by the core network.

A Policy Control and Charging (PCC) rule provided by a Policy Control Function (PCF) includes MA PDU session control information. A Session Management Function (SMF) uses them to derive the UE's ATSSS rule and N4 rule of a User Plane Function (UPF). When a dynamic PCC is not used for the MA PDU session, the SMF may provide the ATSSS rule and the N4 rule according to local configuration.

The UE receives the ATSSS rule from the SMF, the ATSSS rule indicates how uplink services should be routed between 3GPP access and non-3GPP access. Similarly, the UPF receives the N4 rule from the SMF, the N4 rule indicates how downlink services should be routed between 3GPP access and non-3GPP access.

A related solution supports multipath transmission at the Transmission Control Protocol (TCP) and Quick UDP Internet Connections (QUICK) protocol levels, as well as protocol-independent ATSSS Low-Layer (ATSSS-LL) data exchange functionality. However, the related solution does not support routing uplink or downlink services between 3GPP access and non-3GPP access at the PDU Set granularity.

As shown in FIG. 2, an embodiment of the present disclosure provides a data transmission method, including:
Step 201: a terminal sending a first message, where the first message is configured to request establishment or update of a Protocol Data Unit (PDU) session of a Multi-Access PDU (MA PDU) type, and the first message includes first capability information, the first capability information is configured to indicate that the terminal supports a multipath transmission capability at a Protocol Data Unit Set (PDU Set) granularity.

In this embodiment of the present disclosure, the first message mentioned above may be a PDU session establishment message or a PDU session update message.

It should be noted that, in the embodiment of the present disclosure, the terminal may extend the above-mentioned first capability according to the existing functions. For example, the first capability may be extended according to the ATSSS-LL function, or the first capability may be extended independently.

The aforementioned first capability information may be added to an existing parameter in the first message. For example, the aforementioned first capability information may be added therein, or the first capability information may be added directly to the first message.

Step 202: the terminal obtaining a second message, where the second message is sent by a Session Management Function (SMF) according to the first message, the second message includes Access Traffic Steering, Switching, Splitting (ATSSS) rule information, the ATSSS rule information includes PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity.

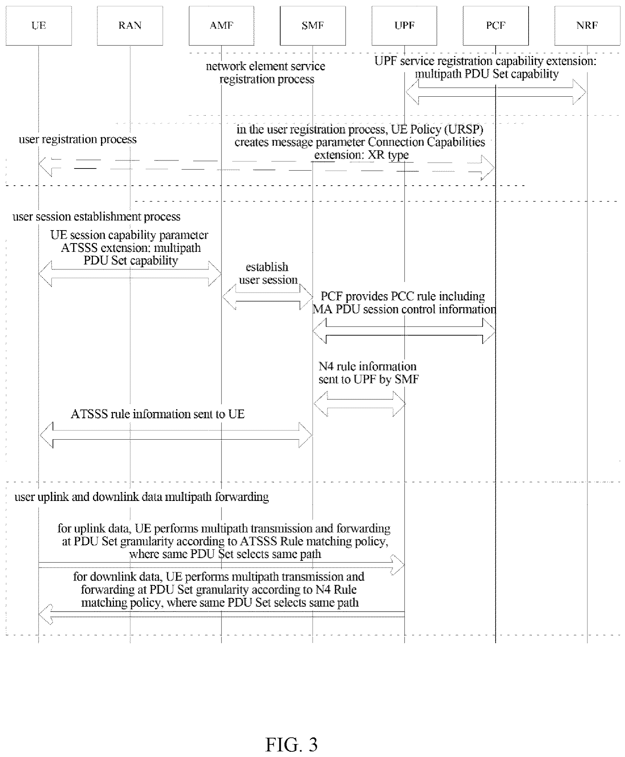

As an example, as shown in FIG. 3, in the PDU session establishment process, the terminal sends a PDU session establishment message to an Access and Mobility Management Function (AMF), the PDU session establishment message includes the aforementioned first capability information. After the AMF and SMF interact to establish a user session, the SMF returns ATSSS rule information to the terminal. The ATSSS rule information includes PDU Set indication information and a first transmission parameter.

Step 203: the terminal performing the data multipath transmission at the PDU Set granularity according to the first transmission parameter when the PDU Set indication information indicates that the data multipath transmission is performed at the PDU Set granularity.

In embodiments of the present disclosure, the terminal sends a first message, where the first message is configured to request establishment or update of a PDU session of an MA PDU type, and the first message includes first capability information, the first capability information is configured to indicate that the terminal supports a multipath transmission capability at a PDU Set granularity; the terminal obtains a second message, where the second message is sent by a SMF according to the first message, the second message includes ATSSS rule information, the ATSSS rule information includes PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity; the terminal performs the data multipath transmission at the PDU Set granularity according to the first transmission parameter when the PDU Set indication information indicates that the data multipath transmission is performed at the PDU Set granularity. The above solution enables the terminal to perform the data multipath transmission at the PDU Set granularity according to the transmission parameter corresponding to the data multipath transmission at the PDU Set granularity, thus preventing PDUs in the same PDU Set from being distributed to different transmission paths, thereby effectively ensuring the transmission order of multiple PDUs in the PDU Set and improving transmission performance.

In some embodiments, the terminal sending the first message includes:
obtaining connection capability information sent by a Policy Control Function (PCF), where the connection capability information includes an Extended Reality (XR) type;
sending the first message according to the connection capability information.

In some embodiments, the obtaining connection capability information sent by a Policy Control Function (PCF) includes:
obtaining UE Route Selection Policy (URSP) information sent by the PCF, where the URSP information includes a service descriptor, the service descriptor includes the connection capability information.

In the embodiment of the present disclosure, the terminal with the ATSSS (PDU Set granularity) capability may match Connection Capabilities as XR and indicate the preferred multi-access type according to the URSP information (or URSP rule) provided by the PCF, thereby determining whether to request an MA PDU session.

The connection capabilities in the embodiment of the present disclosure are enhanced by adding the aforementioned XR capabilities to existing IP Multimedia Subsystem (IMS), Member Management System (MMS), Secure User Plane Location (SUPL), and Internet.

As an example, as shown in FIG. 3, the UE Route Selection Policy (URSP) information sent by the PCF may be obtained during the user registration process. Of course, the above URSP information may also be obtained in other processes, and no specific limitations are made here.

In some embodiments, the first message includes Session Management (SM) capability information, the SM capability information includes an ATSSS parameter, the ATSSS parameter includes the first capability information.

In the embodiment of the present disclosure, the aforementioned first capability information may be added to an existing ATSSS parameter, so that the network may provide an MA PDU session that conforms to the terminal's capabilities according to the terminal's requirements.

For example, the above-mentioned SM capability information is a 5G SM capability, and the above-mentioned first capability information may be added to the ATSSS-ST parameter in the ATSSS parameter of the 5G SM capability.

It should be noted that the first capability information or the second capability information in the embodiments of this disclosure may also be described as multipath PDU Set functionality (MP PDU Set functionality).

In some embodiments, the terminal performing the data multipath transmission at the PDU Set granularity according to the first transmission parameter includes:
the terminal transmitting multiple PDUs of a same PDU Set on a same transmission path according to the first transmission parameter, where the PDU Set is a PDU Set corresponding to an Extended Reality (XR) service.

In the embodiment of the present disclosure, the SMF adapts the ATSSS rule information at the PDU Set granularity according to the first message and sends it to the terminal. As shown in FIG. 3, for XR service uplink data, the terminal performs multipath transmission and forwarding at the PDU Set granularity according to the ATSSS rule information, where the same PDU Set selects the same path.

In embodiments of the present disclosure, the terminal sends a first message, where the first message is configured to request establishment or update of a PDU session of an MA PDU type, and the first message includes first capability information, the first capability information is configured to indicate that the terminal supports a multipath transmission capability at a PDU Set granularity; the terminal obtains a second message, where the second message is sent by a SMF according to the first message, the second message includes ATSSS rule information, the ATSSS rule information includes PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity; the terminal performs the data multipath transmission at the PDU Set granularity according to the first transmission parameter when the PDU Set indication information indicates that the data multipath transmission is performed at the PDU Set granularity. The above solution enables the terminal to perform the data multipath transmission at the PDU Set granularity according to the transmission parameter corresponding to the data multipath transmission at the PDU Set granularity, thus preventing PDUs in the same PDU Set from being distributed to different transmission paths, thereby effectively ensuring the transmission order of multiple PDUs in the PDU Set and improving transmission performance.

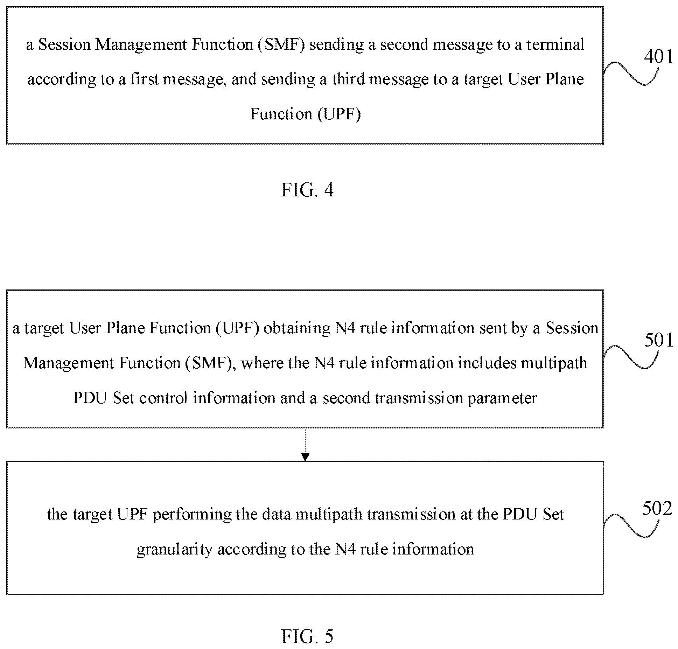

As shown in FIG. 4, an embodiment of the present disclosure further provides a data transmission method, including:
Step 401: a Session Management Function (SMF) sending a second message to a terminal according to a first message, and sending a third message to a target User Plane Function (UPF).

The first message is configured to request establishment or update of a Protocol Data Unit (PDU) session of a Multi-Access PDU (MA PDU) type, and the first message includes first capability information, the first capability information is configured to indicate that the terminal supports a multipath transmission capability at a PDU Set granularity.

The second message includes ATSSS rule information, the ATSSS rule information includes PDU Set indication information and a first transmission parameter, the PDU Set indication information is configured to indicate whether data multipath transmission is performed at the PDU Set granularity, and the first transmission parameter is configured to indicate a transmission parameter corresponding to the data multipath transmission at the PDU Set granularity.

The third message includes N4 rule information, the N4 rule information includes multipath PDU Set control information and a second transmission parameter, the multipath PDU Set control information is configured to indicate activation of transmission switching of multipath transmission traffic based on the PDU Set granularity, the second transmission parameter is configured to indicate a transmission parameter corresponding to the data multipath transmission at the PDU Set granularity.

As an example, the SMF adds the PDU Set indication information to the service descriptor of the ATSSS rule information and adds the aforementioned first transmission parameter to the access selection parameter.

In the embodiment of the disclosure, the SMF sends the second message to the terminal according to the first message and sends the third message to the target user plane function (UPF), enabling the terminal and the UPF to perform data multipath transmission at the PDU Set granularity, thus preventing PDUs in the same PDU Set from being distributed to different transmission paths, thereby effectively ensuring the transmission order of multiple PDUs in the PDU Set and improving transmission performance.

In the embodiment of the disclosure, after receiving the first message, the SMF may create ATSSS rule information and N4 rule information according to the locally configured MA PDU session control information, or may create ATSSS rule information and N4 rule information according to the PCC rule information.

In some embodiments, before sending the second message to the terminal and sending the third message to the UPF, the method further includes:
obtaining Policy Control and Charging (PCC) rule information sent by a PCF, where the PCC rule information includes MA PDU session control information, the MA PDU session control information includes the PDU Set indication information and a third transmission parameter, the third transmission parameter is configured to indicate a transmission parameter corresponding to the data multipath transmission at the PDU Set granularity;
creating the ATSSS rule information and the N4 rule information according to the PCC rule information.

In the embodiment of the disclosure, the SMF may create the aforementioned ATSSS rule information and the N4 rule information according to the PDU Set indication information and the third transmission parameter in the PCC rule information.

As an example, as shown in FIG. 3, in the user session establishment process, the SMF sends the above ATSSS rule information to the terminal and sends the above N4 rule information to the target UPF (i.e., the UPF in FIG. 3).

In addition, an Application Function (AF) or a Network Exposure Function (NEF) may also provide the SMF with PDU Set information and related control policy information.

In some embodiments, before sending the third message to the target UPF, the method further includes:
selecting a UPF that supports the multipath transmission capability at the PDU Set granularity as the target UPF according to the first message.

In the embodiment of the disclosure, the SMF sends the second message to the terminal according to the first message and sends the third message to the target user plane function (UPF), enabling the terminal and the UPF to perform data multipath transmission at the PDU Set granularity, thus preventing PDUs in the same PDU Set from being distributed to different transmission paths, thereby effectively ensuring the transmission order of multiple PDUs in the PDU Set and improving transmission performance.

As shown in FIG. 5, an embodiment of the present disclosure further provides a data transmission method, including:
Step 501: a target User Plane Function (UPF) obtaining N4 rule information sent by a Session Management Function (SMF), where the N4 rule information includes multipath PDU Set control information and a second transmission parameter, the multipath PDU Set control information is configured to indicate activation of transmission switching of multipath transmission traffic based on a PDU Set granularity, the second transmission parameter is configured to indicate a transmission parameter corresponding to data multipath transmission at the PDU Set granularity.
Step 502: the target UPF performing the data multipath transmission at the PDU Set granularity according to the N4 rule information.

In the embodiment of the disclosure, a target User Plane Function (UPF) obtains N4 rule information sent by a Session Management Function (SMF), where the N4 rule information includes multipath PDU Set control information and a second transmission parameter, the multipath PDU Set control information is configured to indicate activation of transmission switching of multipath transmission traffic based on a PDU Set granularity, the second transmission parameter is configured to indicate a transmission parameter corresponding to data multipath transmission at the PDU Set granularity; the target UPF performs the data multipath transmission at the PDU Set granularity according to the N4 rule information. The above solution enables the UPF to perform the data multipath transmission at the PDU Set granularity according to the transmission parameter corresponding to the data multipath transmission at the PDU Set granularity, thus preventing PDUs in the same PDU Set from being distributed to different transmission paths, thereby effectively ensuring the transmission order of multiple PDUs in the PDU Set and improving transmission performance.

In some embodiments, the target UPF performing the data multipath transmission at the PDU Set granularity according to the N4 rule information includes:
transmitting multiple PDUs of a same PDU Set on a same transmission path according to the N4 rule information, where the PDU Set is a PDU Set corresponding to an Extended Reality (XR) service.

As shown in FIG. 3, for XR service downlink data, the target UPF performs multipath transmission and forwarding at the PDU Set granularity according to the N4 rule information, where the same PDU Set selects the same path.

In some embodiments, the method in the embodiment of the present disclosure further includes:
sending a registration request message to a Network Repository Function (NRF), where the registration request message includes second capability information, the second capability information is configured to indicate that the target UPF supports a multipath transmission capability at the PDU Set granularity, the N4 rule information is sent by the SMF when the target UPF supports the multipath transmission capability at the PDU Set granularity.

It should be noted that, in the embodiment of the present disclosure, the target UPF may extend the above-mentioned second capability based on the existing functions. For example, the second capability may be extended based on the ATSSS-LL function, or the second capability may be extended independently.

As shown in FIG. 3, in the network element service registration process, the target UPF extends the multipath PDU Set capability in the information registered with the NRF, so that the NRF may select a UPF that meets the conditions when providing service discovery for a Network Function (NF) (such as the SMF).

The solution of the present disclosure will now be described in detail with reference to embodiments.

In a first embodiment of this disclosure, the UPF initiates a registration request message to the NRF. Specifically, the PUT request initiated by the UPF provides the NF profile of the UPF. The UPF adds the aforementioned second capability information to the ATSSS Capability information in the UPF information (upfInfo). The NRF processes the registration request of the UPF. If the request is successful, the NRF saves the information in upfInfo that the ATSSS capability supports the second capability and returns a registration success message.

In a second embodiment of this disclosure, the SMF sends a service discovery request to the NRF. The service discovery request includes query parameters, and the ATSSS capability of the query parameters includes multipath transmission capability at the PDU Set granularity. That is, the service discovery request is configured to request a UPF that supports the multipath transmission capability at the PDU Set granularity. The NRF selects a UPF that supports the multipath transmission capability at the PDU Set granularity according to the service discovery request of the SMF and sends it to the SMF.

In a third embodiment of this disclosure, URSP extended XR type connection capability is supported during the registration process. Specifically, the terminal sends a registration request. After processing the registration request of the terminal according to the existing protocol solution, the AMF sends a registration acceptance message to the terminal. This registration acceptance message provides an MA PDU session support indicator to notify the terminal whether ATSSS is supported. The UE uses this indicator to determine whether to initiate a process related to the MA PDU session. Then, the new AMF sends a UE policy control creation request (Npcf_UEPolicyControl creation request) to the PCF, and the PCF sends a UE policy control creation response (Npcf_UEPolicyControl creation response) to the new AMF. Specifically, the XR type is added to connection capability parameters of the URSP service descriptor in the UE policy control creation response, so that the UE with the ATSSS (PDU Set granularity) capability may match Connection Capabilities as XR and indicate the preferred multi-access type according to the provided URSP rule, thereby determining whether to request an MA PDU session.

It should be noted that the AMF provides the MA PDU session support indicator, which does not distinguish between specific ATSSS capability types, but only indicates whether ATSSS capability is available.

In a fourth embodiment of this disclosure, the extended XR type connection capability is supported during UE configuration update process. Specifically, the PCF determines to update the UE policy according to the triggering conditions; the PCF calls the forwarding N1N2 message (Namf_Communication_N1N2MessageTransfer) and adds the XR type to the connection capabilities of the URSP service descriptor parameters in the UE Policy Container contained therein; the UE updates the UE policy provided by the PCF and supports the XR type added to the connection capabilities in the URSP.

In a fifth embodiment of this disclosure, the creation process for a UE with the ATSSS functionality to request an MA PDU session includes:
Step 1: the UE provides a request type as "MA PDU Request" in a downlink non-access stratum (UL NAS) transmission message, and provides its ATSSS capability in the PDU session establishment request message. The ATSSS capability parameters are extended to support the multipath PDU Set (MP PDUset) capability, which is the first capability.

Specifically, the UE session capability (5GSM Core Network Capability) parameter ATSSS is extended: adding multipath PDU Set functionality (MP PDU Set functionality).

In this step, the UE sends the aforementioned PDU session establishment request to the AMF. After receiving the PDU session establishment request, the AMF processes it according to the existing protocol and performs PCF selection.

Step 2: the PCF provides the SMF with the PCC rule, which includes MA PDU session control information. In the PCC Rule, the MA PDU Session Control information is extended by the PDU Set indication parameter (i.e., PDU Set indicator), and MP PDUSet functionality is added to the Steering Functionality.

Step 3: the SMF selects a UPF.

Specifically, according to the ATSSS capability (MP PDU Set functionality) information carried in the UE session request, a UPF that supports ATSSS capability (MP PDU Set functionality) is selected.

Step 4: the SMF extends the N4 rule sent to the UPF: adding PDU Set granularity multipath transmission control information (MP PDU Set Control Information), and adding MP PDU Set functionality to the Multi-Access Rule, i.e., the second transmission parameter mentioned above.

The PDU Set granularity multipath transmission control information mentioned above is the multipath PDU Set control information mentioned above.

Step 5: the SMF extends the ATSSS Rule sent to the UE: adding the PDU Set indication parameter (i.e., PDU Set indicator) to the ATSSS rule in the MA PDU session message, and adding the MP PDUSet functionality (i.e., the first capability information) to the access selection parameter.

After extending the ATSSS Rule, the SMF performs processing according to the relevant protocol, and sends a PDU session establishment acceptance message to the UE through the RAN.

Step 6: the UE receives the PDU session establishment acceptance message, which indicates to the UE that the requested MA PDU session has been successfully established. The message includes the addition of the PDU Set indication parameter (i.e., PDU Set indicator) and MP PDU Set functionality to the ATSSS rule.

In a sixth embodiment of this disclosure, the process of a UE or a network requesting an MA PDU session update includes:
Step 1: the UE sends a PDU session update request message to the AMF.

After the AMF interacts with the Visited SMF (V-SMF), Visited UPF (V-UPF), and Home SMF (H-SMF) according to the existing protocol, the H-SMF sends a PDU session update response to the V-SMF.

Step 2: the H-SMF may determine to update the ATSSS rule and/or N4 rule according to the updated PCC rule.

Specifically, when the ATSSS rule and/or N4 rule is updated, PDU set granularity multipath transmission capability-related parameter information is added therein.

Step 3: the H-SMF triggers a PDU session update (Nsmf_PDU Session_update) request, which includes the updated ATSSS rule. The PDU Set indication parameter (i.e., PDU Set indicator) is added to the ATSSS rule, and MP PDU Set functionality (i.e., the first capability information) is added to the access selection parameter in the ATSSS rule.

Step 4: the H-SMF updates the N4 Rule: adding PDU Set granularity multipath transmission control information (MP PDU Set Control Information), and adding MP PDU Set functionality (i.e., the second capability information) to the Multi-Access Rule of the N4 Rule.

Step 5: if the H-SMF provides the updated ATSSS rule, the V-SMF may include the updated ATSSS rule in the N1 SM container (PDU session modification command).

Subsequent steps may be handled in accordance with the existing protocols, and will not be repeated here.

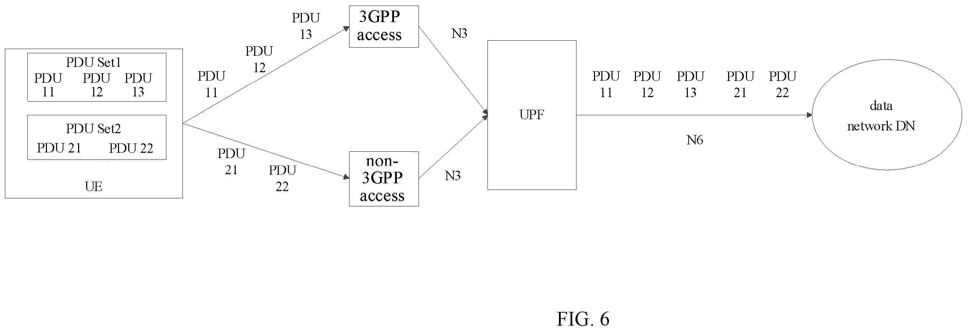

In a seventh embodiment of this disclosure, the uplink traffic PDU Set granularity multipath traffic splitting and forwarding process of the UE with the ATSSS functionality is as follows. For the UE side, the UE has the MP PDU Set functionality and supports multipath data transmission on the established MA PDU Session; the UE performs multipath traffic splitting for XR APP services at the PDU Set granularity according to the ATSSS Rule sent by the SMF, where the same PDU Set is split to the same path. As shown in FIG. 6, PDU Set1 includes 3 PDUs, all of which are transmitted through the 3GPP access path; PDU Set2 includes 2 PDUs, both of which are transmitted through the Non-3GPP access path.

On the UPF side: the UPF has the MP PDU Set functionality capability and supports multipath data transmission on the established MA PDU Session; the UPF receives packets of PDU Set1 and PDU Set2 transmitted from different paths, processes them for services, and then forwards them to the DN. As shown in FIG. 6, in data forwarded by the UPF to the Data Network (DN), packets within the same PDU Set still maintain their original order.

The solution in embodiments of this disclosure is compared with solutions that do not support PDU Set granularity multipath transmission, in which the UE may split the same PDU Set onto different transmission paths, which may result in out-of-order transmission of different PDUs within the same PDU Set during UPF reception, thereby affecting service quality and service experience.

In embodiments of the present disclosure, there is no strict requirement for the order between different PDU Sets. For example, when the UPF transfers packets to the DN side, it may be PDU Set1 or PDU Set2 first, or the packets of PDU Set1 and PDU Set2 may be sent at intervals. However, the order of packets within the same PDU Set remains relatively unchanged.

The UE allocates uplink traffic to different PDU Sets on different paths according to the ATSSS rule, and may also combine other conditions, such as network interface availability, access performance measurement results of different paths, etc., which are not limited herein.

The same applies to downlink traffic, which is not repeated herein.

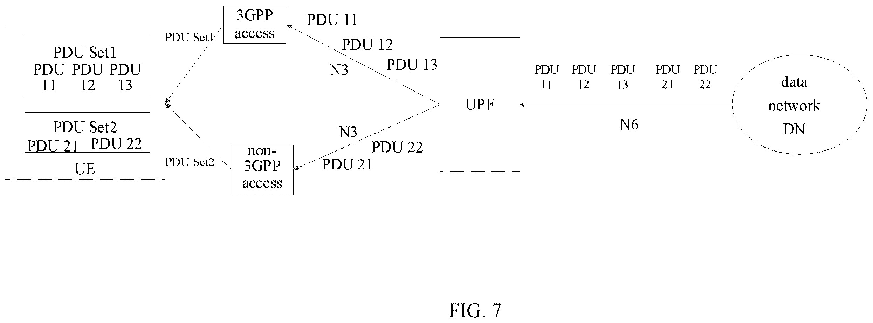

In an eighth embodiment of this disclosure, the downlink traffic PDU Set granularity multipath traffic splitting and forwarding process of the UPF with the ATSSS functionality is as follows. For the UPF side, the UPF has the MP PDU Set functionality and supports multipath data transmission on the established MA PDU Session. The UPF receives XR service packets from the DN side, identifies the XR service packets according to the multi-access forwarding rule in the N4 Rule, and performs multipath transmission according to different PDU Sets, where the same PDU Set is routed to the same path. As shown in FIG. 7, PDU Set1 includes 3 PDUs, all of which are transmitted through the 3GPP Access path; PDU Set2 includes 2 PDUs, both of which are transmitted through the Non-3GPP Access path.

UE side: the UE has the MP PDU Set functionality capability and supports multipath data transmission on the established MA PDU Session. The UE receives packets of PDU Set1 and PDU Set2 transmitted from different paths and uploads them to the XR APP. As shown in FIG. 7, in the packets sent by the UE to the XR APP, packets within the same PDU Set still maintain their original order.

The solution in embodiments of this disclosure provides a PDU Set granularity multipath transmission technology, which enables XR media services to improve network performance and user experience through the PDU Set granularity multipath transmission technology.

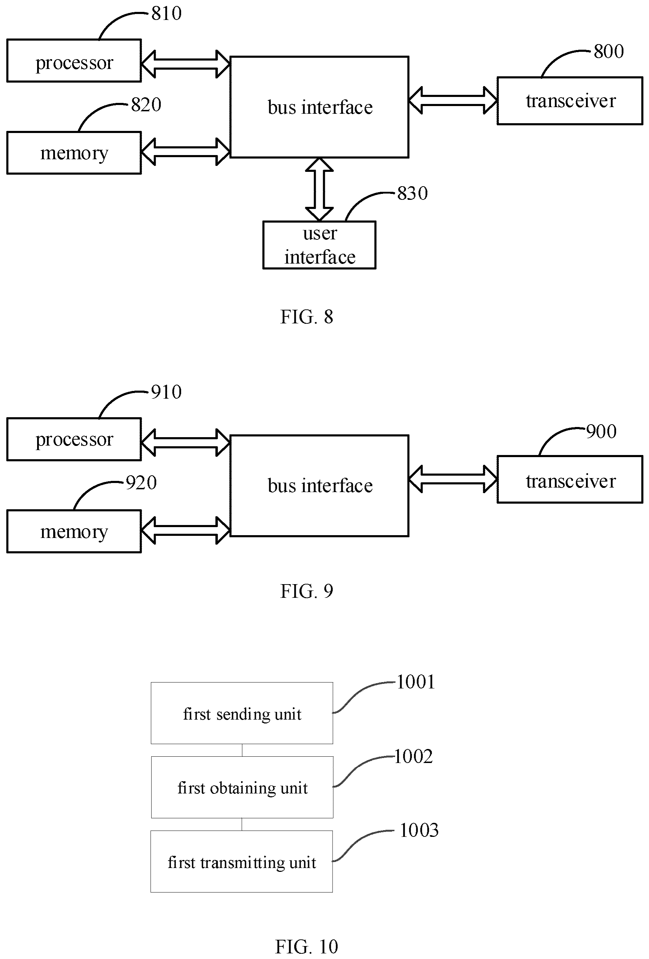

As shown in FIG. 8, an embodiment of the present disclosure provides a data transmission device applied to a terminal. The device includes a memory 820, a transceiver 800, and a processor 810.

The memory 820 is configured to store a computer program; the transceiver 800 is configured to send and receive data under control of the processor 810; the processor 810 is configured to read the computer program in the memory 820 and perform following operations:
sending a first message, where the first message is configured to request establishment or update of a Protocol Data Unit (PDU) session of a Multi-Access PDU (MA PDU) type, and the first message includes first capability information, the first capability information is configured to indicate that the terminal supports a multipath transmission capability at a Protocol Data Unit Set (PDU Set) granularity;
obtaining a second message, where the second message is sent by a Session Management Function (SMF) according to the first message, the second message includes Access Traffic Steering, Switching, Splitting (ATSSS) rule information, the ATSSS rule information includes PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity;
performing the data multipath transmission at the PDU Set granularity according to the first transmission parameter when the PDU Set indication information indicates that the data multipath transmission is performed at the PDU Set granularity.

In FIG. 8, the bus architecture may include any number of interconnected buses and bridges, specifically linking together various circuits of one or more processors represented by the processor 810 and a memory represented by the memory 820. The bus architecture may also link together various other circuits such as peripherals, regulators and power management circuits, which are well known in the art and will not be described further herein. The bus interface provides the interface. The transceiver 800 may be multiple components, including a transmitter and a receiver, providing a unit for communicating with various other devices over a transmission medium, including wireless channels, wired channels, optical fibers, and other transmission media. For different user devices, the user interface 830 may also be an interface that may connect to external or internal devices, including but not limited to keypads, displays, speakers, microphones, joysticks, etc.

The processor 810 is responsible for managing the bus architecture and general processing, while the memory 820 may store the data used by the processor 810 during operation.

Optionally, the processor 810 may be a central processing unit (CPU), an application specific integrated circuit (ASIC), a field-programmable gate array (FPGA), or a complex programmable logic device (CPLD). The processor may also adopt a multi-core architecture.

The processor performs any of the methods provided in the embodiments of this disclosure by invoking a computer program stored in the memory, in accordance with the obtained executable instructions. The processor and the memory may also be physically separated.

In some embodiments, the processor further performs following steps:
obtaining connection capability information sent by a Policy Control Function (PCF), where the connection capability information includes an Extended Reality (XR) type;
sending the first message according to the connection capability information.

In some embodiments, the processor further performs following steps:
obtaining UE Route Selection Policy (URSP) information sent by the PCF, where the URSP information includes a service descriptor, the service descriptor includes the connection capability information.

In some embodiments, the first message includes Session Management (SM) capability information, the SM capability information includes an ATSSS parameter, the ATSSS parameter includes the first capability information.

In some embodiments, the processor further performs following steps:
transmitting multiple PDUs of a same PDU Set on a same transmission path according to the first transmission parameter, where the PDU Set is a PDU Set corresponding to an Extended Reality (XR) service.

It should be noted that the device provided in the embodiment of the present disclosure can implement all the method steps implemented in the above-described data transmission method embodiment applied to the terminal, and can achieve the same technical effects. Therefore, the parts and beneficial effects that are the same as those in the method embodiment will not be described in detail here.

As shown in FIG. 9, an embodiment of the present disclosure further provides a data transmission device, which includes a memory 920, a transceiver 900, and a processor 910.

The memory 920 is configured to store a computer program; the transceiver 900 is configured to send and receive data under control of the processor.

In an embodiment of this disclosure, the processor 910 is configured to send a second message to a terminal according to a first message, and send a third message to a target user plane function (UPF).

The first message is configured to request establishment or update of a Protocol Data Unit (PDU) session of a Multi-Access PDU (MA PDU) type, and the first message includes first capability information, the first capability information is configured to indicate that the terminal supports a multipath transmission capability at a PDU Set granularity.

The second message includes ATSSS rule information, the ATSSS rule information includes PDU Set indication information and a first transmission parameter, the PDU Set indication information is configured to indicate whether data multipath transmission is performed at the PDU Set granularity, and the first transmission parameter is configured to indicate a transmission parameter corresponding to the data multipath transmission at the PDU Set granularity.

The third message includes N4 rule information, the N4 rule information includes multipath PDU Set control information and a second transmission parameter, the multipath PDU Set control information is configured to indicate activation of transmission switching of multipath transmission traffic based on the PDU Set granularity, the second transmission parameter is configured to indicate a transmission parameter corresponding to the data multipath transmission at the PDU Set granularity.

In some embodiments, the processor further performs following steps:
obtaining Policy Control and Charging (PCC) rule information sent by a PCF, where the PCC rule information includes MA PDU session control information, the MA PDU session control information includes the PDU Set indication information and a third transmission parameter, the third transmission parameter is configured to indicate a transmission parameter corresponding to the data multipath transmission at the PDU Set granularity;
creating the ATSSS rule information and the N4 rule information according to the PCC rule information.

In some embodiments, the processor further performs following steps:
selecting a UPF that supports the multipath transmission capability at the PDU Set granularity as the target UPF according to the first message.

It should be noted that the device provided in the embodiment of the present disclosure can implement all the method steps implemented in the above-described data transmission method embodiment applied to the SMF, and can achieve the same technical effects. Therefore, the parts and beneficial effects that are the same as those in the method embodiment will not be described in detail here.

In an embodiment of this disclosure, the processor 910 is configured to read a computer program in the memory and perform following operations:
obtaining N4 rule information sent by a Session Management Function (SMF), where the N4 rule information includes multipath PDU Set control information and a second transmission parameter, the multipath PDU Set control information is configured to indicate activation of transmission switching of multipath transmission traffic based on a PDU Set granularity, the second transmission parameter is configured to indicate a transmission parameter corresponding to data multipath transmission at the PDU Set granularity;
performing the data multipath transmission at the PDU Set granularity according to the N4 rule information.

In some embodiments, the processor further performs following steps:
transmitting multiple PDUs of a same PDU Set on a same transmission path according to the N4 rule information, where the PDU Set is a PDU Set corresponding to an Extended Reality (XR) service.

In some embodiments, the processor further performs following steps:
sending a registration request message to a Network Repository Function (NRF), where the registration request message includes second capability information, the second capability information is configured to indicate that the target UPF supports a multipath transmission capability at the PDU Set granularity, the N4 rule information is sent by the SMF when the target UPF supports the multipath transmission capability at the PDU Set granularity.

It should be noted that the device provided in the embodiment of the present disclosure can implement all the method steps implemented in the above-described data transmission method embodiment applied to the target UPF, and can achieve the same technical effects. Therefore, the parts and beneficial effects that are the same as those in the method embodiment will not be described in detail here.

In FIG. 9, the bus architecture may include any number of interconnected buses and bridges, specifically linking together various circuits of one or more processors represented by the processor 910 and a memory represented by the memory 920. The bus architecture may also link together various other circuits such as peripherals, regulators and power management circuits, which are well known in the art and will not be described further herein. The bus interface provides the interface. The transceiver 900 may be multiple components, including a transmitter and a receiver, providing a unit for communicating with various other devices over a transmission medium, including wireless channels, wired channels, optical fibers, and other transmission media. The processor 910 is responsible for managing the bus architecture and general processing, while the memory 920 may store the data used by the processor 910 during operation.

The processor 910 may be a central processing unit (CPU), an application specific integrated circuit (ASIC), a field-programmable gate array (FPGA), or a complex programmable logic device (CPLD). The processor may also adopt a multi-core architecture.

As shown in FIG. 10, an embodiment of the present disclosure further provides a data transmission device, including:
a first sending unit 1001, configured to send a first message, where the first message is configured to request establishment or update of a Protocol Data Unit (PDU) session of a Multi-Access PDU (MA PDU) type, and the first message includes first capability information, the first capability information is configured to indicate that the terminal supports a multipath transmission capability at a Protocol Data Unit Set (PDU Set) granularity;
a first obtaining unit 1002, configured to obtain a second message, where the second message is sent by a Session Management Function (SMF) according to the first message, the second message includes Access Traffic Steering, Switching, Splitting (ATSSS) rule information, the ATSSS rule information includes PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity;
a first transmitting unit 1003, configured to perform the data multipath transmission at the PDU Set granularity according to the first transmission parameter when the PDU Set indication information indicates that the data multipath transmission is performed at the PDU Set granularity.

In some embodiments, the first sending unit includes:
a first obtaining subunit, configured to obtain connection capability information sent by a Policy Control Function (PCF), where the connection capability information includes an Extended Reality (XR) type;
a first sending subunit, configured to send the first message according to the connection capability information.

In some embodiments, the first obtaining subunit is configured to obtain UE Route Selection Policy (URSP) information sent by the PCF, where the URSP information includes a service descriptor, the service descriptor includes the connection capability information.

In some embodiments, the first message includes Session Management (SM) capability information, the SM capability information includes an ATSSS parameter, the ATSSS parameter includes the first capability information.

In some embodiments, the first transmitting unit is configured to transmit multiple PDUs of a same PDU Set on a same transmission path according to the first transmission parameter, where the PDU Set is a PDU Set corresponding to an Extended Reality (XR) service.

It should be noted that the device provided in the embodiment of the present disclosure can implement all the method steps implemented in the above-described data transmission method embodiment applied to the terminal, and can achieve the same technical effects. Therefore, the parts and beneficial effects that are the same as those in the method embodiment will not be described in detail here.

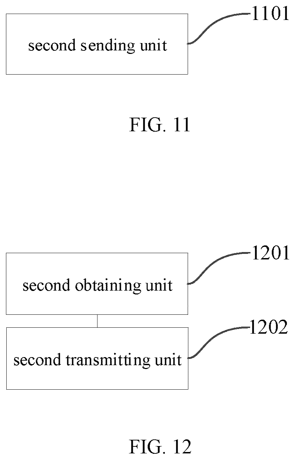

As shown in FIG. 11, an embodiment of the present disclosure further provides a data transmission device, including:
a second sending unit 1101, configured to send a second message to a terminal according to a first message, and send a third message to a target User Plane Function (UPF);
the first message is configured to request establishment or update of a Protocol Data Unit (PDU) session of a Multi-Access PDU (MA PDU) type, and the first message includes first capability information, the first capability information is configured to indicate that the terminal supports a multipath transmission capability at a PDU Set granularity;
the second message includes ATSSS rule information, the ATSSS rule information includes PDU Set indication information and a first transmission parameter, the PDU Set indication information is configured to indicate whether data multipath transmission is performed at the PDU Set granularity, and the first transmission parameter is configured to indicate a transmission parameter corresponding to the data multipath transmission at the PDU Set granularity;
the third message includes N4 rule information, the N4 rule information includes multipath PDU Set control information and a second transmission parameter, the multipath PDU Set control information is configured to indicate activation of transmission switching of multipath transmission traffic based on the PDU Set granularity, the second transmission parameter is configured to indicate a transmission parameter corresponding to the data multipath transmission at the PDU Set granularity.

In some embodiments, the device of the embodiment of the present disclosure further includes:
a third obtaining unit, configured to obtain Policy Control and Charging (PCC) rule information sent by a PCF before the second sending unit sends the second message to the terminal and sends the third message to the UPF, where the PCC rule information includes MA PDU session control information, the MA PDU session control information includes the PDU Set indication information and a third transmission parameter, the third transmission parameter is configured to indicate a transmission parameter corresponding to the data multipath transmission at the PDU Set granularity;
a creating unit, configured to create the ATSSS rule information and the N4 rule information according to the PCC rule information.

In some embodiments, the device of the embodiment of the present disclosure further includes:
a selecting unit, configured to select a UPF that supports the multipath transmission capability at the PDU Set granularity as the target UPF according to the first message before the second sending unit sends the third message to the target UPF.

It should be noted that the device provided in the embodiment of the present disclosure can implement all the method steps implemented in the above-described data transmission method embodiment applied to the SMF, and can achieve the same technical effects. Therefore, the parts and beneficial effects that are the same as those in the method embodiment will not be described in detail here.

As shown in FIG. 12, an embodiment of the present disclosure further provides a data transmission device, including:
a second obtaining unit 1201, configured to obtain N4 rule information sent by a Session Management Function (SMF), where the N4 rule information includes multipath PDU Set control information and a second transmission parameter, the multipath PDU Set control information is configured to indicate activation of transmission switching of multipath transmission traffic based on a PDU Set granularity, the second transmission parameter is configured to indicate a transmission parameter corresponding to data multipath transmission at the PDU Set granularity;
a second transmitting unit 1202, configured to perform the data multipath transmission at the PDU Set granularity according to the N4 rule information.

In some embodiments, the second transmitting unit is configured to transmit multiple PDUs of a same PDU Set on a same transmission path according to the N4 rule information, where the PDU Set is a PDU Set corresponding to an Extended Reality (XR) service.

In some embodiments, the device of the embodiment of the present disclosure further includes:
a third sending unit, configured to send a registration request message to a Network Repository Function (NRF), where the registration request message includes second capability information, the second capability information is configured to indicate that the target UPF supports a multipath transmission capability at the PDU Set granularity, the N4 rule information is sent by the SMF when the target UPF supports the multipath transmission capability at the PDU Set granularity.

It should be noted that the device provided in the embodiment of the present disclosure can implement all the method steps implemented in the above-described data transmission method embodiment applied to the target UPF, and can achieve the same technical effects. Therefore, the parts and beneficial effects that are the same as those in the method embodiment will not be described in detail here.

It should be noted that the division of units in the embodiments of the present disclosure is illustrative and is merely a logical functional division. In actual implementation, there may be other division methods. In addition, the functional units in various embodiments of this disclosure may be integrated into one processing unit, or each unit may exist physically separately, or two or more units may be integrated into one unit. The integrated units described above may be implemented in either hardware or software functional units.

If the integrated unit is implemented as a software functional unit and sold or used as an independent product, it may be stored in a processor-readable storage medium. According to such understanding, the technical solution of this disclosure, or the part that contributes to the related technology, or all or part of the technical solution, may be embodied in the form of a software product. The computer software product is stored in a storage medium and includes several instructions to cause a computer device (which may be a personal computer, a server, or a network device, etc.) or a processor to perform all or part of the steps of the methods described in the various embodiments of this disclosure. The aforementioned storage medium may include: USB flash drive, portable hard drive, read-only memory (ROM), random access memory (RAM), magnetic disk, optical disk, and other media that may store program codes.

In some embodiments of this disclosure, a processor-readable storage medium is also provided, which stores program instructions for causing the processor to perform all the steps implemented in the above-described data transmission method embodiments, and can achieve the same technical effects. The parts and beneficial effects that are the same as those in the method embodiment will not be described in detail here.

The terminal device involved in the embodiments of this disclosure may be a device that provides voice and/or data connection to a user, a handheld device with the wireless connection function, or other processing devices connected to a wireless modem, etc. The name of the terminal device may be different in different systems. For example, in a 5G system, the terminal device may be called User Equipment (UE). The wireless terminal device may communicate with one or more core networks (CNs) via a radio access network (RAN). The wireless terminal device may be a mobile terminal device, such as a mobile phone (or a "cellular" phone) and a computer with a mobile terminal device, for example, portable, pocket, handheld, computer-embedded, or vehicle-mounted mobile devices, which exchange voice and/or data with the radio access network. Examples include Personal Communication Service (PCS) phones, cordless phones, Session Initiated Protocol (SIP) phones, Wireless Local Loop (WLL) stations, and Personal Digital Assistants (PDAs), etc. The wireless terminal device may also be referred to as a system, a subscriber unit, a subscriber station, a mobile station, a mobile, a remote station, an access point, a remote terminal, an access terminal, a user terminal, a user agent, or a user device, but is not limited to these terms in the embodiments disclosed herein.

The network device (or network-side device) involved in the embodiments of this disclosure may be a base station, which may include multiple cells that provide services to terminals. Depending on the specific application, a base station may also be called an access point, or may be a device in the access network that communicates with wireless terminal devices through one or more sectors on the air interface, or other names. The network device may be configured to exchange received air frames with Internet Protocol (IP) packets, and act as a router between the wireless terminal device and the rest of the access network, which may include Internet Protocol (IP) communication networks. The network device may also coordinate the management of attributes for air interfaces. For example, the network device involved in embodiments of this disclosure may be a base transceiver station (BTS) in Global System for Mobile communications (GSM) or Code Division Multiple Access (CDMA), a NodeB in Wide-band Code Division Multiple Access (WCDMA), an evolutional Node B (eNB or e-NodeB) in a Long Term Evolution (LTE) system, a 5G base station (gNB) in a next generation system, a Home evolved Node B (HeNB), a relay node, a femto, a pico, etc., and is not limited in this disclosure. In some network architectures, the network device may include centralized unit (CU) nodes and distributed unit (DU) nodes, which may also be geographically separated.

The network device and the terminal device may each use one or more antennas to perform multiple input multiple output (MIMO) transmission. MIMO transmission may be single user MIMO (SU-MIMO) or multiple user MIMO (MU-MIMO). Depending on the shape and number of antenna combinations, MIMO transmission may be 2Dimension MIMO (2D-MIMO), 3Dimension MIMO (3D-MIMO), Full Dimension MIMO (FD-MIMO), or massive MIMO (massive-MIMO), or may be diversity transmission, pre-coded transmission, or beamforming transmission, etc.

Those skilled in the art will understand that the embodiments of this disclosure may be provided as methods, systems, or computer program products. Therefore, this disclosure may take the form of a completely hardware embodiment, a completely software embodiment, or an embodiment combining software and hardware aspects. Furthermore, this disclosure may take the form of a computer program product implemented on one or more computer-usable storage media (including, but not limited to, disk storage and optical storage) containing computer-usable program codes.

This disclosure is described with reference to flowcharts and/or block diagrams of methods, device (systems), and computer program products according to embodiments of this disclosure. It should be understood that each process and/or block in the flowchart and/or block diagram, as well as the combination of processes and/or blocks in the flowchart and/or block diagram, may be implemented by computer executable instructions. These computer executable instructions may be provided to a processor of a general-purpose computer, a special-purpose computer, an embedded processor, or other programmable data processing device to produce a machine, such that the instructions, which execute via the processor of the computer or other programmable data processing device, produce means for implementing functions specified in one or more processes in a flowchart and/or in one or more blocks in a block diagram.

These processor executable instructions may also be stored in a processor-readable memory that may instruct a computer or other programmable data processing device to operate in a particular manner, such that the instructions stored in the processor-readable memory produce an article of manufacture including instruction means that implement functions specified in one or more processes in a flowchart and/or in one or more blocks in a block diagram.

These processor executable instructions may also be loaded onto a computer or other programmable data processing device to cause a series of operational steps to be performed on the computer or other programmable device to produce a computer-implemented process, such that the instructions, which execute on the computer or other programmable device, provide steps for implementing functions specified in one or more processes in a flowchart and/or in one or more blocks in a block diagram.

It should be noted that the above division of modules is only a logical functional division. In actual implementation, they may be fully or partially integrated into a single physical entity, or may be physically separated. Furthermore, these modules may all be implemented in the form of software calling through processing components; or may be implemented entirely in hardware form; or some modules may be implemented by calling software through processing components, while others may be implemented through hardware. For example, a determination module may be a separate processing element, or may be integrated into a chip of the aforementioned device; or may be stored in the memory of the aforementioned device as program codes, and called by a processing element of the aforementioned device to perform functions of the above determination module. The implementation of other modules is similar. Furthermore, these modules may be integrated together, either in whole or in part, or implemented independently. The processing element described here may be an integrated circuit with signal processing capabilities. In the implementation process, each step of the above method or above module may be implemented by the integrated logic circuit of the hardware in the processor element or by instructions in the form of software.

For example, each module, unit, subunit, or submodule may be one or more integrated circuits configured to implement the above methods, such as one or more application specific integrated circuits (ASICs), one or more digital signal processors (DSPs), or one or more field programmable gate arrays (FPGAs), etc. For example, when one of the above modules is implemented in the form of a processing element calling program codes, the processing element may be a general-purpose processor, such as a central processing unit (CPU) or other processors that may call program codes. For example, these modules may be integrated together and implemented in the form of a system-on-a-chip (SOC).

The terms "first", "second", etc., used in the specification and claims of this disclosure are configured to distinguish similar objects and are not necessarily configured to describe a specific order or sequence. It should be understood that the terms used in this way may be interchanged where appropriate so that the embodiments of this disclosure described herein may be implemented, for example, in a sequence other than those illustrated or described herein. Furthermore, the terms "comprise" and "have", and any variations thereof, are intended to cover non-exclusive inclusion, such that a process, method, system, product, or device that includes a series of steps or units is not necessarily limited to those steps or units that are explicitly listed, but may include other steps or units that are not explicitly listed or that are inherent to such process, method, product, or device. Furthermore, the use of "and/or" in the specification and claims indicates at least one of the connected objects, such as A and/or B and/or C, indicating seven possibilities: A alone, B alone, C alone, A and B both present, B and C both present, A and C both present, and A, B and C all present. Similarly, the use of "at least one of A and B" in the specification and claims should be understood as "A alone, B alone, or A and B both present".

Obviously, those skilled in the art may make various modifications and variations to this disclosure without departing from spirit and scope of this disclosure. Thus, if these modifications and variations of this disclosure fall within the scope of the claims of this disclosure and their equivalents, this disclosure is also intended to include these modifications and variations.

## Claims

1. A data transmission method, comprising:
a terminal sending a first message, wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a Protocol Data Unit Set (PDU Set) granularity;
the terminal obtaining a second message, wherein the second message is sent by a Session Management Function (SMF) according to the first message, the second message comprises Access Traffic Steering, Switching, Splitting (ATSSS) rule information, the ATSSS rule information comprises PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity;
the terminal performing the data multipath transmission at the PDU Set granularity according to the first transmission parameter when the PDU Set indication information indicates that the data multipath transmission is performed at the PDU Set granularity.

2. The method of claim 1, wherein the terminal sending the first message comprises:
obtaining connection capability information sent by a Policy Control Function (PCF), wherein the connection capability information comprises an Extended Reality (XR) type;
sending the first message according to the connection capability information.

3. The method of claim 2, wherein the obtaining connection capability information sent by a Policy Control Function (PCF) comprises:
obtaining UE Route Selection Policy (URSP) information sent by the PCF, wherein the URSP information comprises a service descriptor, the service descriptor comprises the connection capability information.

4. The method of any one of claims 1 to 3, wherein the first message comprises Session Management (SM) capability information, the SM capability information comprises an ATSSS parameter, the ATSSS parameter comprises the first capability information.

5. The method of claim 1, wherein the terminal performing the data multipath transmission at the PDU Set granularity according to the first transmission parameter comprises:
the terminal transmitting multiple PDUs of a same PDU Set on a same transmission path according to the first transmission parameter, wherein the PDU Set is a PDU Set corresponding to an Extended Reality (XR) service.

6. A data transmission method, comprising:
a Session Management Function (SMF) sending a second message to a terminal according to a first message, and sending a third message to a target User Plane Function (UPF);
wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a PDU Set granularity;
the second message comprises ATSSS rule information, the ATSSS rule information comprises PDU Set indication information and a first transmission parameter, the PDU Set indication information is configured to indicate whether data multipath transmission is performed at the PDU Set granularity, and the first transmission parameter is configured to indicate a transmission parameter corresponding to the data multipath transmission at the PDU Set granularity;
the third message comprises N4 rule information, the N4 rule information comprises multipath PDU Set control information and a second transmission parameter, the multipath PDU Set control information is configured to indicate activation of transmission switching of multipath transmission traffic based on the PDU Set granularity, the second transmission parameter is configured to indicate a transmission parameter corresponding to the data multipath transmission at the PDU Set granularity.

7. The method of claim 6, before sending the second message to the terminal and sending the third message to the UPF, the method further comprising:
obtaining Policy Control and Charging (PCC) rule information sent by a PCF, wherein the PCC rule information comprises MA PDU session control information, the MA PDU session control information comprises the PDU Set indication information and a third transmission parameter, the third transmission parameter is configured to indicate a transmission parameter corresponding to the data multipath transmission at the PDU Set granularity;
creating the ATSSS rule information and the N4 rule information according to the PCC rule information.

8. The method of claim 6, before sending the third message to the target UPF, the method further comprising:
selecting a UPF that supports the multipath transmission capability at the PDU Set granularity as the target UPF according to the first message.

9. A data transmission method, comprising:
a target User Plane Function (UPF) obtaining N4 rule information sent by a Session Management Function (SMF), wherein the N4 rule information comprises multipath PDU Set control information and a second transmission parameter, the multipath PDU Set control information is configured to indicate activation of transmission switching of multipath transmission traffic based on a PDU Set granularity, the second transmission parameter is configured to indicate a transmission parameter corresponding to data multipath transmission at the PDU Set granularity;
the target UPF performing the data multipath transmission at the PDU Set granularity according to the N4 rule information.

10. The method of claim 9, wherein the target UPF performing the data multipath transmission at the PDU Set granularity according to the N4 rule information comprises:
transmitting multiple PDUs of a same PDU Set on a same transmission path according to the N4 rule information, wherein the PDU Set is a PDU Set corresponding to an Extended Reality (XR) service.

11. The method of claim 9, further comprising:
sending a registration request message to a Network Repository Function (NRF), wherein the registration request message comprises second capability information, the second capability information is configured to indicate that the target UPF supports a multipath transmission capability at the PDU Set granularity, the N4 rule information is sent by the SMF when the target UPF supports the multipath transmission capability at the PDU Set granularity.

12. A data transmission device, comprising a memory, a transceiver, and a processor; wherein the memory is configured to store a computer program; the transceiver is configured to send and receive data under control of the processor; and the processor is configured to read the computer program in the memory and perform following operations:
sending a first message, wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a Protocol Data Unit Set (PDU Set) granularity;
obtaining a second message, wherein the second message is sent by a Session Management Function (SMF) according to the first message, the second message comprises Access Traffic Steering, Switching, Splitting (ATSSS) rule information, the ATSSS rule information comprises PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity;
performing the data multipath transmission at the PDU Set granularity according to the first transmission parameter when the PDU Set indication information indicates that the data multipath transmission is performed at the PDU Set granularity.

13. The device of claim 12, wherein the processor further performs following steps:
obtaining connection capability information sent by a Policy Control Function (PCF), wherein the connection capability information comprises an Extended Reality (XR) type;
sending the first message according to the connection capability information.

14. The device of claim 13, wherein the processor further performs following steps:
obtaining UE Route Selection Policy (URSP) information sent by the PCF, wherein the URSP information comprises a service descriptor, the service descriptor comprises the connection capability information.

15. The device of any one of claims 12 to 14, wherein the first message comprises Session Management (SM) capability information, the SM capability information comprises an ATSSS parameter, the ATSSS parameter comprises the first capability information.

16. The device of claim 12, wherein the processor further performs following steps:
transmitting multiple PDUs of a same PDU Set on a same transmission path according to the first transmission parameter, wherein the PDU Set is a PDU Set corresponding to an Extended Reality (XR) service.

17. A data transmission device, comprising a memory, a transceiver, and a processor;
wherein the memory is configured to store a computer program; the transceiver is configured to send and receive data under control of the processor; and the processor is configured to read the computer program in the memory and perform following operations:
sending a second message to a terminal according to a first message, and sending a third message to a target User Plane Function (UPF);
wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a PDU Set granularity;
the second message comprises ATSSS rule information, the ATSSS rule information comprises PDU Set indication information and a first transmission parameter, the PDU Set indication information is configured to indicate whether data multipath transmission is performed at the PDU Set granularity, and the first transmission parameter is configured to indicate a transmission parameter corresponding to the data multipath transmission at the PDU Set granularity;
the third message comprises N4 rule information, the N4 rule information comprises multipath PDU Set control information and a second transmission parameter, the multipath PDU Set control information is configured to indicate activation of transmission switching of multipath transmission traffic based on the PDU Set granularity, the second transmission parameter is configured to indicate a transmission parameter corresponding to the data multipath transmission at the PDU Set granularity.

18. The device of claim 17, wherein the processor further performs following steps:
obtaining Policy Control and Charging (PCC) rule information sent by a PCF, wherein the PCC rule information comprises MA PDU session control information, the MA PDU session control information comprises the PDU Set indication information and a third transmission parameter, the third transmission parameter is configured to indicate a transmission parameter corresponding to the data multipath transmission at the PDU Set granularity;
creating the ATSSS rule information and the N4 rule information according to the PCC rule information.

19. The device of claim 17, wherein the processor further performs following steps:
selecting a UPF that supports the multipath transmission capability at the PDU Set granularity as the target UPF according to the first message.

20. A data transmission device, comprising a memory, a transceiver, and a processor;
wherein the memory is configured to store a computer program; the transceiver is configured to send and receive data under control of the processor; and the processor is configured to read the computer program in the memory and perform following operations:
obtaining N4 rule information sent by a Session Management Function (SMF), wherein the N4 rule information comprises multipath PDU Set control information and a second transmission parameter, the multipath PDU Set control information is configured to indicate activation of transmission switching of multipath transmission traffic based on a PDU Set granularity, the second transmission parameter is configured to indicate a transmission parameter corresponding to data multipath transmission at the PDU Set granularity;
performing the data multipath transmission at the PDU Set granularity according to the N4 rule information.

21. The device of claim 20, wherein the processor further performs following steps:
transmitting multiple PDUs of a same PDU Set on a same transmission path according to the N4 rule information, wherein the PDU Set is a PDU Set corresponding to an Extended Reality (XR) service.

22. The device of claim 20, wherein the processor further performs following steps:
sending a registration request message to a Network Repository Function (NRF), wherein the registration request message comprises second capability information, the second capability information is configured to indicate that the target UPF supports a multipath transmission capability at the PDU Set granularity, the N4 rule information is sent by the SMF when the target UPF supports the multipath transmission capability at the PDU Set granularity.

23. A data transmission device, comprising:
a first sending unit, configured to send a first message, wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a Protocol Data Unit Set (PDU Set) granularity;
a first obtaining unit, configured to obtain a second message, wherein the second message is sent by a Session Management Function (SMF) according to the first message, the second message comprises Access Traffic Steering, Switching, Splitting (ATSSS) rule information, the ATSSS rule information comprises PDU Set indication information and a first transmission parameter, the PDU Set indication information is configured to indicate whether data multipath transmission is performed at the PDU Set granularity, the first transmission parameter is configured to indicate a transmission parameter corresponding to the data multipath transmission at the PDU Set granularity;
a first transmitting unit, configured to perform the data multipath transmission at the PDU Set granularity according to the first transmission parameter when the PDU Set indication information indicates that the data multipath transmission is performed at the PDU Set granularity.

24. The device of claim 23, wherein the first sending unit comprises:
a first obtaining subunit, configured to obtain connection capability information sent by a Policy Control Function (PCF), wherein the connection capability information comprises an Extended Reality (XR) type;
a first sending subunit, configured to send the first message according to the connection capability information.

25. The device of claim 24, wherein the first obtaining subunit is configured to obtain UE Route Selection Policy (URSP) information sent by the PCF, wherein the URSP information comprises a service descriptor, the service descriptor comprises the connection capability information.

26. The device of any one of claims 23 to 25, wherein the first message comprises Session Management (SM) capability information, the SM capability information comprises an ATSSS parameter, the ATSSS parameter comprises the first capability information.

27. The device of claim 23, wherein the first transmitting unit is configured to transmit multiple PDUs of a same PDU Set on a same transmission path according to the first transmission parameter, wherein the PDU Set is a PDU Set corresponding to an Extended Reality (XR) service.

28. A data transmission device, comprising:
a second sending unit, configured to send a second message to a terminal according to a first message, and send a third message to a target User Plane Function (UPF);
wherein the first message is configured to request establishment or update of a Protocol Data Unit (PDU) session of a Multi-Access PDU (MA PDU) type, and the first message comprises first capability information, the first capability information is configured to indicate that the terminal supports a multipath transmission capability at a PDU Set granularity;
the second message comprises ATSSS rule information, the ATSSS rule information comprises PDU Set indication information and a first transmission parameter, the PDU Set indication information is configured to indicate whether data multipath transmission is performed at the PDU Set granularity, and the first transmission parameter is configured to indicate a transmission parameter corresponding to the data multipath transmission at the PDU Set granularity;
the third message comprises N4 rule information, the N4 rule information comprises multipath PDU Set control information and a second transmission parameter, the multipath PDU Set control information is configured to indicate activation of transmission switching of multipath transmission traffic based on the PDU Set granularity, the second transmission parameter is configured to indicate a transmission parameter corresponding to the data multipath transmission at the PDU Set granularity.

29. The device of claim 28, further comprising:
a third obtaining unit, configured to obtain Policy Control and Charging (PCC) rule information sent by a PCF before the second sending unit sends the second message to the terminal and sends the third message to the UPF, wherein the PCC rule information comprises MA PDU session control information, the MA PDU session control information comprises the PDU Set indication information and a third transmission parameter, the third transmission parameter is configured to indicate a transmission parameter corresponding to the data multipath transmission at the PDU Set granularity;
a creating unit, configured to create the ATSSS rule information and the N4 rule information according to the PCC rule information.

30. The device of claim 28, further comprising:
a selecting unit, configured to select a UPF that supports the multipath transmission capability at the PDU Set granularity as the target UPF according to the first message before the second sending unit sends the third message to the target UPF.

31. A data transmission device, comprising:
a second obtaining unit, configured to obtain N4 rule information sent by a Session Management Function (SMF), wherein the N4 rule information comprises multipath PDU Set control information and a second transmission parameter, the multipath PDU Set control information is configured to indicate activation of transmission switching of multipath transmission traffic based on a PDU Set granularity, the second transmission parameter is configured to indicate a transmission parameter corresponding to data multipath transmission at the PDU Set granularity;
a second transmitting unit, configured to perform the data multipath transmission at the PDU Set granularity according to the N4 rule information.

32. The device of claim 31, wherein the second transmitting unit is configured to transmit multiple PDUs of a same PDU Set on a same transmission path according to the N4 rule information, wherein the PDU Set is a PDU Set corresponding to an Extended Reality (XR) service.

33. The device of claim 31, further comprising:
a third sending unit, configured to send a registration request message to a Network Repository Function (NRF), wherein the registration request message comprises second capability information, the second capability information is configured to indicate that the target UPF supports a multipath transmission capability at the PDU Set granularity, the N4 rule information is sent by the SMF when the target UPF supports the multipath transmission capability at the PDU Set granularity.

34. A processor-readable storage medium, storing a computer program, the computer program is configured to cause a processor to perform steps of the data transmission method of any one of claims 1 to 5, or to perform steps of the data transmission method of any one of claims 6 to 8, or to perform steps of the data transmission method of any one of claims 9 to 11.
